# EUROPÄISCHE PATENTSCHRIFT

(11) **EP 3 100 938 B1**
(45) Veröffentlichungstag und Bekanntmachung des Hinweises auf die Patenterteilung: **13.05.2020**
(21) Anmeldenummer: 16172665.8
(22) Anmeldetag: 02.06.2016
(51) Int. Cl.: B62K 15/00, B62K 3/00, B62K 5/05

(54) **ROLLER**
ROLLER
SCOOTER

(30) Priorität: 05.06.2015 DE 202015102917 U
(43) Veröffentlichungstag der Anmeldung: 07.12.2016
(73) Patentinhaber: Ponticelli, Pius, 4616 Kappel (CH)
(72) Erfinder: Ponticelli, Pius, 4616 Kappel (CH)
(74) Vertreter: Patentanwälte und Rechtsanwalt Weiß, Arat & Partner mbB

(56) Entgegenhaltungen:
- EP-A1- 1 138 590
- DE-A1- 10 204 478
- DE-C1- 10 016 635
- DE-U1- 20 101 480
- DE-U1-202011 001 596
- FR-A1- 2 955 827

## Beschreibung

Die vorliegende Erfindung betrifft ein Roller nach dem Oberbegriff von Schutzanspruch 1.

### Stand der Technik

Aus dem Stand der Technik sind verschiedene Roller bekannt und gebräuchlich. So ist beispielsweise in der DE 20 2011 001 596 U1 ein Roller beschrieben, welcher sowohl von Kleinkindern als auch grösseren Kindern gefahren werden kann. Hierzu kann der Roller für die Benutzung durch Kleinkinder mit einem Sattel oder Sitz sowie einer speziellen Lenkeinrichtung versehen werden, welche, wenn das Kind grösser geworden ist, einzeln demontiert werden können.

Weiterhin offenbart die FR 2 955 827 offenbart einen Roller mit einem Trittbrett und einer Lenkstange, wobei das Trittbrett einends eine Rolle aufweist und andernends eine Walze aufweist, wobei das Trittbrett aus einem ersten Trittabschnitt und einem zweiten Trittabschnitt besteht, wobei der zweite Trittabschnitt zu dem ersten Trittabschnitt längenveränderlich verschiebbar und festlegbar ist.
Die DE 100 16 635 C1 offenbart ein Rollerboard mit einer in Fahrtrichtung verlaufenden Längsachse, welches ein Trittelement, mindestens ein Rad am hinteren Endbereich des Trittelementes, zwei lenkbare Räder am vorderen Endbereich des Trittelementes, einen Lenkmechanismus und eine Steuerstange umfasst.

Die DE 102 04 478 A1 offenbart ein multifunktionales mobiles Gerät mit einer Lenkereinheit mit einem Griffteil, einem Frontteil mit zwei Vorderrädern und einem Heckteil mit einem Hinterrad. Das Frontteil ist an der Lenkereinheit und/oder am Heckteil klappbar gelagert, so dass das Gerät durch Verschwenken von Lenkereinheit, Frontteil und Heckteil zwischen einem Roller-Zustand, einem Caddy-Zustand und eine Trolley-Zustand überführbar ist.

Nachteilig an den aus dem Stand der Technik bekannten Rollern ist der Umstand, dass eine weitere mögliche flexible Anpassung an verschiedene Personengrössen nicht vorgesehen ist bzw. auf Kosten der Langlebigkeit der Roller gehen oder unverhältnismässig grosse Herstellungskosten erfordern. Die DE 102 04 478 A1 offenbart ein multifunktionales mobiles Gerät mit einer Lenkereinheit mit einem Griffteil, einem Frontteil mit zwei Vorderrädern und einem Heckteil mit einem Hinterrad. Das Frontteil ist an der Lenkereinheit und/oder am Heckteil klappbar gelagert, so dass das Gerät durch Verschwenken von Lenkereinheit, Frontteil und Heckteil zwischen einem Roller-Zustand, einem Caddy-Zustand und eine Trolley-Zustand überführbar ist.
Die EP 1 138 590 A1 beschreibt einen Roller mit Lenker, dessen Trittbrett aus vier Teilen besteht, welche teleskopförmig ineinander verschoben werden können.

Weiter wird auf die DE 201 01 480 U1 hingewiesen, welche die Präambel der unabhängigen Ansprüche 1, 2 und 9 zeigt. Dort ist ein Roller beschrieben, dessen Trittbrett aus drei Teilen besteht. Es besteht aus einer zentralen Platte, in welche eine Frontplatte mit Lenkeinrichtung von der einen Seite und eine Heckplatte mit Heckrolle von der anderen Seite untergeschoben und festgelegt werden können. Nachteilig an den aus dem Stand der Technik bekannten Rollern ist der Umstand, dass eine weitere mögliche flexible Anpassung an verschiedene Personengrössen nicht vorgesehen ist bzw. auf Kosten der Langlebigkeit der Roller gehen oder unverhältnismässig grosse Herstellungskosten erfordern. Das Trittbrett weist weiterhin einends Rollen und andernends zumindest eine Walze auf. Die Walze ist an dem zweiten, eine Bremse umfassenden Trittabschnitt angeordnet. Selbstverständlich kann auch mehr als eine Walze vorgesehen sein.

Die Rollen sind an dem ersten, eine Aufnahme für die Lenkstange aufweisenden Trittabschnitt angeordnet und sind Teil einer Neige-Lenk-Konstruktion, wie sie weiter unten ausführlich beschrieben ist. Das bedeutet, dass der Roller mittels Gewichtsverlagerung des Benutzers auf dem Trittbrett oder durch Umschwenken der Lenkstange von dem Trittbrett aus gesehen nach rechts oder links in verschiedene Richtungen in verschiedene Richtungen gelenkt werden kann. Eine Gewichtsverlagerung des Benutzers auf dem Trittbrett in eine Richtung und die damit zusammenhängende Neigung einer der Rollen bewirkt über die Konstruktion von Achsen, Verbindungsarmen sowie einer Verbindungsstange eine entsprechende Neigung des jeweils anderen Rolle.

Die Bremse am zweiten Trittabschnitt besteht aus einem Verbindungssteg und einem Teilkreis-Röhrenabschnitt. Der Teilkreis-Röhrenabschnitt weist einen Fusstrittbereich auf, wobei ein Scheitelpunkt des Fusstrittbereichs in oder unter einer Längenerstreckung des Trittbretts bzw. des zweiten Trittabschnittes verläuft.

Mit anderen Worten befindet sich eine Oberseite der Bremse bevorzugt in einer Ebene mit einer Oberseite bzw. Oberfläche des zweiten Trittabschnittes. Weiter bevorzugt befindet sich die Oberseite der Bremse unterhalb der Oberfläche des zweiten Trittabschnittes. Damit ist die Bremse nicht höher angeordnet als der zweite Trittabschnitt. Daraus folgt, dass der Benutzer des Rollers im Gebrauch ganz hinten auf dem Roller stehen kann, ohne dass dabei die Bremse betätigt wird. Das Betätigen der Bremse ist ein aktiver Vorgang, bei dem der Benutzer seinen Fuss direkt auf die Bremse legen muss, um dann durch ein Niederdrücken der Bremse auf den Umfang der Walze die Bremswirkung zu erzielen.

Die Bremse bzw. ihr Teilkreis-Röhrenabschnitt kann sich über die gesamte Breite der Walze erstrecken oder nur über einen Teil der Breite. Ferner umgibt die Bremse bzw. ihr Teilkreis-Röhrenabschnitt einen Teil eines Umfangs der Walze und ist auf einer Unterseite des zweiten Trittabschnittes mittels eines Winkels und eines dazugehörigen Befestigungselementes befestigt. Jegliche andere Verbindungsmöglichkeit soll hier umfasst sein. Wichtig ist, dass die Bremse dabei bevorzugt schwenkbar bleibt, sodass die Bremse auf den Umfang der Walze gedrückt werden kann, wenn die Bremse von dem Benutzer mit einem Fuss gegen die Wirkung einer Feder betätigt wird, d.h. nach unten in Richtung eine Ebene, auf der sich der Roller befindet, und damit auf den Umfang der Walze gedrückt wird. Dadurch entsteht eine Reibung, wodurch wiederum eine Bremswirkung erzielt wird.

Die sonstige Form und Ausgestaltung der Bremse ist hier von untergeordneter Bedeutung. Der Vollständigkeit halber sei jedoch darauf hingewiesen, dass die Bremse auch an einteiligen Trittbrettern, sei es aus Metall oder Kunststoff, angeordnet werden kann oder auch, sollte dies vorkommen, an Trittbrettern mit mehr als zwei Trittabschnitten

Die Lenkstange ist lösbar mit dem ersten Trittabschnitt verbunden und weiterhin teleskopierbar ausgebildet. Sowohl die Lösbarkeit der Lenkstange als auch deren Teleskopierbarkeit erfolgen erneut bevorzugt über Nut-FederVerbindungen der bekannten Art. Andere lösbare Verbindungsmöglichkeiten sind denkbar und sollen von der vorliegenden Erfindung umfasst sein. Die Höhe der Lenkstange richtet sich ebenfalls nach dem Benutzer des Rollers. Bei einem Kleinkind weist die Lenkstange eher eine geringe Höhe auf, bei einem grösseren Kind wird die Lenkstange sinnvollerweise höher sein, damit das Kind bequem auf dem Roller fahren kann.

An einem dem Trittbrett gegenüberliegenden Ende der Lenkstange ist ein Haltgriff, ein Halteknauf oder dergleichen Halteinrichtung vorgesehen. Form und Ausgestaltung sind auch hier von untergeordneter Bedeutung.

### Figurenbeschreibung

Weitere Vorteile, Merkmale und Einzelheiten der vorliegenden Erfindung ergeben sich aus der nachfolgenden Beschreibung eines Ausführungsbeispiels sowie anhand der Zeichnungen; diese zeigen in
Figur 1 eine Seitenansicht eines Rollers gemäss der vorliegenden Erfindung;
Figur 2 eine Unteransicht des Rollers nach Figur 1; und
Figur 3 eine perspektivische Unteransicht des Rollers nach Figur 1.

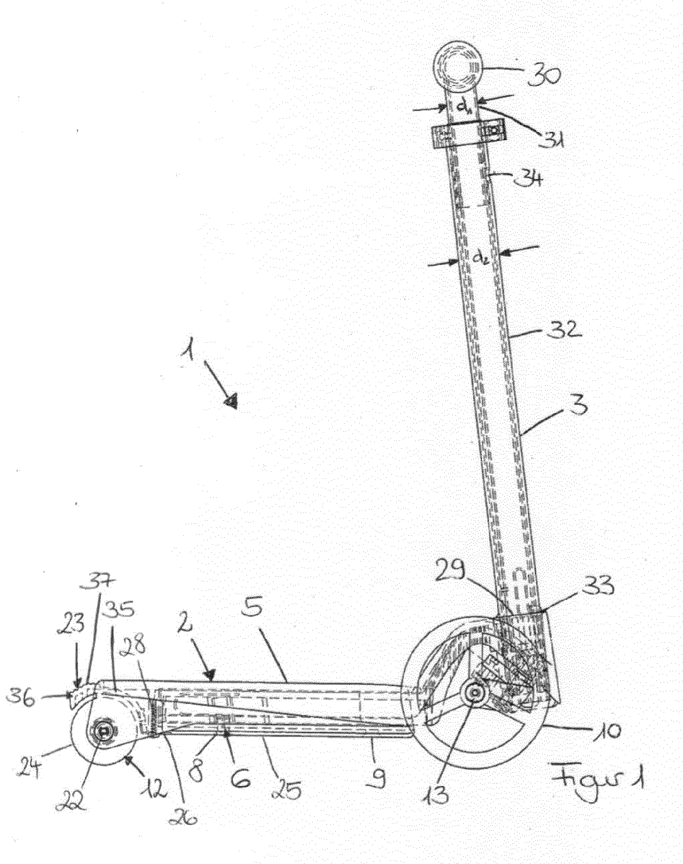

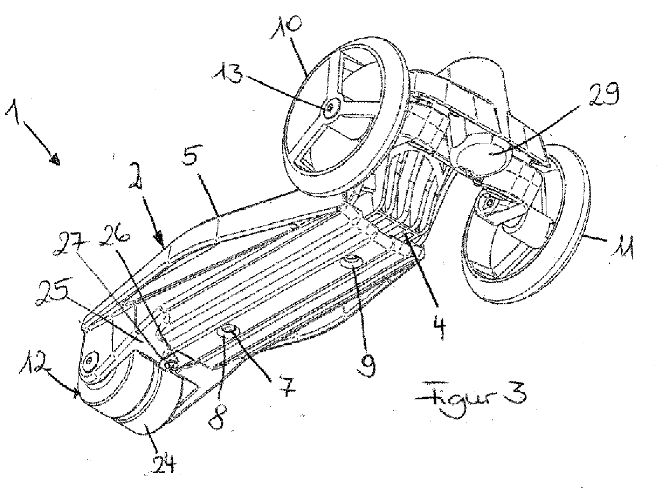

Gemäss den Figuren 1 bis 3 weist ein Roller 1 ein Trittbrett 2 sowie eine Lenkstange 3 auf. Das Trittbrett 2 bzw. seine gesamte Trägerkonstruktion besteht bevorzugt aus Kunststoff und umfasst einen ersten Trittabschnitt 4 und einen zweiten Trittabschnitt 5, wobei der zweite Trittabschnitt 5 zu dem ersten Trittabschnitt 4 längenveränderlich verschiebbar und festlegbar ist. Hierzu ist der zweite Trittabschnitt 5 zu dem ersten Trittabschnitt 4 über eine Nut-Feder-Verbindung 6 verbunden.

Die Nut-Feder-Verbindung 6 ist dabei derart aufgebaut, dass der zweite Trittabschnitt 5 relativ zu dem ersten Trittabschnitt 4 verschiebbar angeordnet ist. Dabei weist der erste Trittabschnitt 4 beispielsweise eine Nut auf und der zweite Trittabschnitt 5 eine Feder. Dies kann aber auch umgekehrt angeordnet sein. Wichtig ist in dem Zusammenhang lediglich, dass der erste Trittabschnitt 4 zu dem zweiten Trittabschnitt relativ verschiebbar sein soll. Relativ verschiebbar bezieht sich hierbei auf den Umstand, dass die Länge des Trittbretts 2 veränderbar sein soll, indem beispielsweise der zweite Trittabschnitt 5 von einer im Wesentlichen den ersten Trittabschnitt 4 verdeckenden Position zu einer im Wesentlichen den ersten Trittabschnitt 4 freigebenden Position verschoben werden können soll. Dieser Vorgang soll auch reversibel möglich sein.

Der erste Trittabschnitt 4 weist folglich einen Federstift 7 auf, welcher reversibel mit einer ersten Nut oder Bohrung 8 oder einer zweiten Nut oder Bohrung 9 des zweiten Trittabschnitts 5 in Wirkverbindung bringbar ist. Dies richtet sich vor allem nach einem Benutzer des Rollers 1. Handelt es sich hierbei um beispielsweise ein Kleinkind, so befindet sich der Federstift 7 des ersten Trittabschnittes 4 bevorzugt in der Bohrung 8 des zweiten Trittabschnittes 5. Damit sind beide Trittabschnitte 4 und 5 ineinander verschoben und eine Trittfläche des Trittbretts 2 ist kurz. Kurz bedeutet bei bestimmungsgemässem Gebrauch, dass die Gesamtausdehnung des Trittbretts 2 bzw. der beiden Trittabschnitte 4 und 5 parallel zu einem Boden kürzer sein soll, als bei auseinandergezogenen Trittabschnitten 4 und 5.

Handelt es sich um ein grösseres Kind, so wird der Federstift 7 des ersten Trittabschnittes 4 aus der Bohrung 8 des zweiten Trittabschnittes 5 gelöst, der zweite Trittabschnitt wird in eine zu der Lenkstange 3 entgegengesetzte Richtung verschoben bis der Federstift 7 in der Bohrung 9 einrastet. Damit sind die Trittabschnitte 4 und 5 auseinandergeschoben und die Trittfläche ist grösser.

Der Federstift 7 kann in einem anderen Ausführungsbeispiel auch im zweiten Trittabschnitt 5 untergebracht sein. In diesem anderen Ausführungsbeispiel wären die beiden Bohrungen 8 und 9 dann in dem ersten Trittabschnitt 4 eingebracht.

Das Trittbrett 2 weist weiterhin einends Rollen 10 und 11 und andernends zumindest eine Walze 12 auf. Die Rollen 10 und 11 sind an dem ersten Trittabschnitt 4 angeordnet und sind Teil einer Neige-Lenk-Konstruktion. Das bedeutet, dass der Roller 1 mittels Gewichtsverlagerung des Benutzers auf dem Trittbrett 2 oder durch Umschwenken der Lenkstange 3 von dem Trittbrett 2 aus gesehen nach rechts oder links in verschiedene Richtungen gelenkt werden kann. Die Rollen 10 und 11 sind um jeweils eine eigene Achse 13 und 14 drehbar angeordnet. Ein jeweils der Rolle 10 bzw. 11 gegenüberliegendes Achsende 15 bzw. 16 ist mit einem Verbindungsarm 17 bzw. 18 bewegbar verbunden. Diese Verbindungsarme 17 und 18 wiederum sind einerseits über Schrauben 19 mit dem ersten Trittabschnitt 4 verbunden, andererseits sind sie über Bolzen 20 mit einer Verbindungsstange 21 verbunden. Die Verbindungsstange 21 ist über die Bolzen 20 beweglich an den Verbindungsarmen 17 und 18 angeordnet und verbindet folglich über die Verbindungsarme 17 und 18 die Rollen 10 und 11 bewegungstechnisch miteinander. Eine Gewichtsverlagerung des Benutzers auf dem Trittbrett 2 in eine Richtung und die damit zusammenhängende Neigung einer der Rollen 10 bzw. 11 bewirkt über die Konstruktion der Achsen 13 bzw. 14, der Verbindungsarme 17 bzw. 18 sowie der Verbindungsstange 21 eine entsprechende Neigung des jeweils anderen Rolle 11 bzw. 10.

Die Walze 12 ist an dem zweiten Trittabschnitt 5 drehbar an einem Achsbolzen 22 angeordnet. Die Walze 12 weist dabei einen geringeren Umfang als die Rollen 10 und 11 auf. Die Walze 12 kann aus einer Einzelwalze oder mehreren einzelnen Walzen bestehen, welche um eine einzige Walzenachse drehbar gelagert sind.

Der zweite Trittabschnitt 5 weist ferner eine Bremse 23 auf. Die Bremse 23 besteht aus einem Verbindungssteg 35 und einem Teilkreis-Röhrenabschnitt 36 besteht. Der Teilkreis-Röhrenabschnitt 36 weist einen Fusstrittbereich 37 auf, wobei ein Scheitelpunkt des Fusstrittbereichs 37 in oder unter einer Längenerstreckung des Trittbretts 2 bzw. des zweiten Trittabschnittes 5 verläuft. Scheitelpunkt bedeutet hierbei den bei bestimmungsgemässem Gebrauch vom Boden entfernteste Punkt des Fusstrittbereichs 37. Für die Längenerstreckung wird ein Endteil des Trittbretts 2 bzw. des zweiten Trittabschnittes 5 herangezogen. Handelt es sich um ein im Wesentlichen flaches Trittbrett 2 bzw. flachen zweiten Trittabschnitt 5, so dient etwa das letzte Drittel des Trittbretts 2 bzw. des zweiten Trittabschnittes 5 als Ansatz für eine gedachte Gerade durch den Endteil und damit für die Längenerstreckung. Ist das Trittbrett 2 bzw. der Trittabschnitt 5 gebogen und/oder mit einer Knickung versehen, so wird das Endteil des Trittbrettes 2 bzw. des zweiten Trittabschnittes 5 nach der Knickung/Biegung für die Längenerstreckung herangezogen. In allen Fällen befindet sich der Scheitelpunkt des Fusstrittbereichs 37 in oder unter der Längenerstreckung des Trittbretts 2 bzw. des zweiten Trittabschnittes 5.

Mit anderen Worten befindet sich eine Oberseite der Bremse 23, d.h. die Fläche der Bremse 23, welche von der Ebene, auf der der Roller 1 steht, abgewandt ist, bevorzugt in einer Ebene mit einer Oberseite bzw. einer Oberfläche des zweiten Trittabschnittes 5, wobei die Definition der Oberseite des Trittabschnittes 5 die gleiche ist wie für die Oberseite der Bremse 23. Oberseite bedeutet hierbei die Seite, welche bei bestimmungsgemässem Gebrauch dem Boden abgewandt ist. Weiter bevorzugt befindet sich die Oberseite der Bremse 23 unterhalb der Oberseite des zweiten Trittabschnittes 5 und damit näher an der Ebene, auf der der Roller 1 steht. Damit ist die Bremse 23 nicht höher angeordnet als der zweite Trittabschnitt 5 bzw. das Trittbrett 2. Daraus folgt, dass der Benutzer des Rollers 1 im Gebrauch ganz hinten auf dem Roller 1 stehen kann, d.h. der Fläche, welche am weitesten entfernt zu der Lenkstange 3 ist und das, ohne dass dabei die Bremse 23 betätigt wird. Das Betätigen der Bremse 23 ist ein aktiver Vorgang, bei dem der Benutzer seinen Fuss direkt auf die Bremse 23 legen muss, um dann durch ein Niederdrücken der Bremse 23 auf den Umfang 24 der Walze 12 die Bremswirkung zu erzielen.

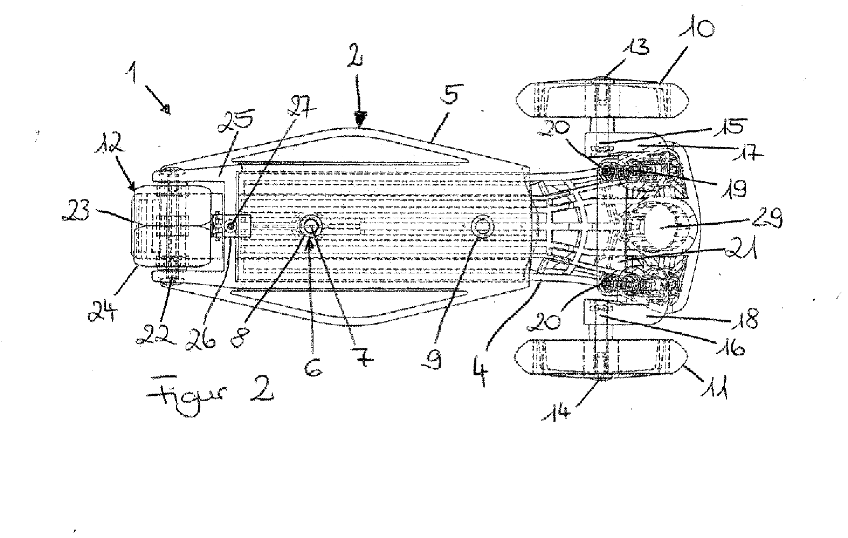

Die Bremse 23 bzw. ihr Teilkreis-Röhrenabschnitt 36 kann sich über die gesamte Breite der Walze 12 erstrecken oder nur über einen Teil der Breite, wie das in Figur 2 ersichtlich ist. Ferner umgibt die Bremse 23 bzw. ihr Teilkreis-Röhrenabschnitt 36 einen Teil eines Umfangs 24 der Walze 12 und ist auf einer Unterseite 25 des zweiten Trittabschnittes 5 mittels eines Winkels 26 und eines dazugehörigen Befestigungselementes 27 befestigt. Die Bremse 23 ist dabei jedoch bevorzugt schwenkbar an dem zweiten Trittabschnitt 5 angeordnet, sodass die Bremse 23 auf dem Umfang 24 der Walze 12 drückbar ist, wenn die Bremse 23 von dem Benutzer mit einem Fuss gegen die Wirkung einer Feder 28 betätigt wird, d.h. nach unten in Richtung eine Ebene, auf der sich der Roller 1 befindet, und damit auf den Umfang 24 der Walze 12 gedrückt wird. Dadurch entsteht eine Reibung, wodurch eine Bremswirkung erzielt wird.

In einem anderen Ausführungsbeispiel kann die Bremse 23 auch als einstückiges Teil des zweiten Trittbretts 5 ausgeführt sein. Das hätte den Vorteil, dass beim Herstellungsprozess das zweite Trittbrett 5 gleich einstückig mit der Bremse 23 aus Kunststoff hergestellt werden könnte.

Der erste Trittabschnitt 4 weist weiterhin eine Aufnahme 29 für die Lenkstange 3 auf. Die Lenkstange 3 ist lösbar mit dem ersten Trittabschnitt 4 verbunden und weiterhin teleskopierbar ausgebildet. Die Lösbarkeit der Lenkstange 3 mit der Aufnahme 29 erfolgt bevorzugt über eine nicht näher dargestellte Kraftschluss- oder Formschlussverbindung, welche bei bestimmungsgemässem Gebrauch durch manuelle Kraft gelöst und verbunden werden kann. Die Teleskopierbarkeit der Lenkstange 3 erfolgt über ein erstes Rohrteil 31 mit einem ersten Durchmesser d1 und einem zweiten Rohrteil 32, dessen zweiter Durchmesser d2 grösser ist, als der erste Durchmesser d1. Das erste Rohrteil 31 weist einen niederdrückbaren Federstift 33 auf, welcher in Ausnehmungen 34 des zweiten Rohrteils 32 je nach Position der beiden Rohrteile 31 und 32 einfährt. Die Höhe der Lenkstange 3 richtet sich erneut nach dem Benutzer des Rollers 1. Bei einem Kleinkind weist die Lenkstange 3 eher eine geringe Höhe auf, bei einem grösseren Kind wird die Lenkstange 3 sinnvollerweise höher sein, damit das Kind bequem auf dem Roller 1 fahren kann.

Höhe wird hierbei als der Abstand zu dem Boden bei bestimmungsgemässem Gebrauch definiert.

An einer dem Trittbrett 2 gegenüberliegenden Seite der Lenkstange 3 ist ein Haltgriff 30, ein Halteknauf oder dergleichen Halteinrichtung vorgesehen.

**Bezugszeichenliste**

| | | | | | |
|---|---|---|---|---|---|
| 1 | Roller | 34 | Ausnehmung | 67 | |
| 2 | Trittbrett | 35 | Verbindungssteg | 68 | |
| 3 | Lenkstange | 36 | Teilkreis-Röhrenabschnitt | 69 | |
| 4 | Trittabschnitt | 37 | Fusstrittabschnitt | 70 | |
| 5 | Trittabschnitt | 38 | | 71 | |
| 6 | Nut-Feder-Verbindung | 39 | | 72 | |
| 7 | Federstift | 40 | | 73 | |
| 8 | Bohrung | 41 | | 74 | |
| 9 | Bohrung | 42 | | 75 | |
| 10 | Rolle | 43 | | 76 | |
| 11 | Rolle | 44 | | 77 | |
| 12 | Walze | 45 | | 78 | |
| 13 | Achse | 46 | | 79 | |
| 14 | Achse | 47 | | | |
| 15 | Achsende | 48 | | | |
| 16 | Achsende | 49 | | | |
| 17 | Verbindungsarm | 50 | | | |
| 18 | Verbindungsarm | 51 | | | |
| 19 | Schraube | 52 | | | |
| 20 | Bolzen | 53 | | d1 | Durchmesser |
| 21 | Verbindungsstange | 54 | | d2 | Durchmesser |
| 22 | Achsbolzen | 55 | | | |
| 23 | Bremse | 56 | | | |
| 24 | Umfang | 57 | | | |
| 25 | Unterseite | 58 | | | |
| 26 | Winkel | 59 | | | |
| 27 | Befestigungselement | 60 | | | |
| 28 | Feder | 61 | | | |
| 29 | Aufnahme | 62 | | | |
| 30 | Haltegriff | 63 | | | |
| 31 | Rohrteil | 64 | | | |
| 32 | Rohrteil | 65 | | | |
| 33 | Federstift | 66 | | | |

## Patentansprüche

1. Roller mit einem Trittbrett (2) und einer Lenkstange (3),
wobei das Trittbrett (2) aus einem ersten Trittabschnitt (4) und einem zweiten Trittabschnitt (5) besteht, wobei der zweite Trittabschnitt (5) zu dem ersten Trittabschnitt (4) längenveränderlich verschiebbar und festlegbar ist, wobei sich eine Gesamtausdehnung des Trittbretts (2) bzw. eine Trittfläche des Trittbretts (2) nach einer den Roller (1) benutzenden Person richtet, wobei das Trittbrett (2) einends Rollen (10, 11) aufweist und andernends eine Walze (12) aufweist, wobei der zweite Trittabschnitt (5) zu dem ersten Trittabschnitt (4) längenveränderlich verschiebbar ist und in zumindest zwei unterschiedlichen Positionen festlegbar ist,
**dadurch gekennzeichnet, dass** einer der Trittabschnitte (4, 5) einen Federstift (7) aufweist und wobei der andere Trittabschnitt (4, 5) zumindest zwei Bohrungen (8, 9) aufweist,
wobei der Federstift (7) reversibel mit der ersten Bohrung (8) oder der zweiten Bohrung (9) in Wirkverbindung bringbar ist, um die Gesamtausdehnung bzw. die Trittfläche des Trittbretts (2) an die Person anzupassen.

2. Roller mit einem Trittbrett (2) und einer Lenkstange (3), wobei das Trittbrett (2) einends Rollen (10, 11) aufweist und andernends eine Walze (12) aufweist, **dadurch gekennzeichnet, dass** das Trittbrett (2) bzw. ein zweiter Trittabschnitt (5) eine Bremse (23) umfasst, wobei die Bremse (23) aus einem Verbindungssteg (35) und einem Teilkreis-Röhrenabschnitt (36) besteht, wobei der Teilkreis-Röhrenabschnitt (36) einen Fusstrittbereich (37) aufweist und ein Scheitelpunkt des Fusstrittbereichs (37) in oder unter einer Längenerstreckung des Trittbretts (2) bzw. des zweiten Trittabschnitts (5) verläuft.

3. Roller nach Anspruch 2, **dadurch gekennzeichnet, dass** die Bremse (23) schwenkbar an dem zweiten Trittabschnitt (5) angeordnet ist, sodass die Bremse (23) auf einen Umfang (24) der Walze (12) drückbar ist.

4. Roller nach einem der vorigen Ansprüche 1 bis 3, **dadurch gekennzeichnet, dass** der zweite Trittabschnitt (5) die Walze (12) umfasst.

5. Roller nach einem der vorigen Ansprüche 2 bis 4, **dadurch gekennzeichnet, dass** ein erster Trittabschnitt (4) einen Federstift (7) aufweist, welcher reversibel mit einer ersten Bohrung (8) oder einer zweiten Bohrung (9) des zweiten Trittabschnitts (5) in Wirkverbindung bringbar ist.

6. Roller nach einem der der Ansprüche 1 oder 5, **dadurch gekennzeichnet, dass** der erste Trittabschnitt (4) eine Aufnahme (29) für die Lenkstange (3) aufweist.

7. Roller nach einem der vorigen Ansprüche, **dadurch gekennzeichnet, dass** die Rollen (10, 11) eine Neige-Lenk-Konstruktion aufweisen.

8. Roller nach einem der vorigen Ansprüche, **dadurch gekennzeichnet, dass** die Lenkstange (3) teleskopierbar festlegbar ist.

9. Roller mit einem Trittbrett (2) und einer Lenkstange (3), wobei das Trittbrett (2) einends Rollen (10, 11) aufweist und andernends eine Walze (12) aufweist, **dadurch gekennzeichnet, dass** die gesamte Trägerkonstruktion des Trittbretts (2) einstückig aus Kunststoff hergestellt ist und eine Bremse (23) umfasst, wobei die Bremse (23) aus einem Verbindungssteg (35) und einem Teilkreis-Röhrenabschnitt (36) besteht, wobei der Teilkreis-Röhrenabschnitt (36) einen Fusstrittbereich (37) aufweist und ein Scheitelpunkt des Fusstrittbereichs (37) in oder unter einer Längenerstreckung des Trittbretts (2) verläuft.

10. Roller nach Anspruch 9, **dadurch gekennzeichnet, dass** die Bremse (23) schwenkbar an dem Trittbrett (2) angeordnet ist, sodass die Bremse (23) auf einen Umfang (24) der Walze (12) drückbar ist.

11. Roller nach einem der vorigen Ansprüche 1 bis 10, **dadurch gekennzeichnet, dass** das Trittbrett (2) eine Aufnahme (29) für die Lenkstange (3) aufweist.

## Claims

1. Scooter with a running board (2) and a handlebar (3),
wherein the running board (2) comprises a first step section (4) and a second step section (5), the second step section (5) being displaceable and fixable in a length-changing manner relative to the first step section (4), an overall extent of the running board (2) or a step surface of the step board (2) is directed towards a person using the scooter (1), the step board (2) having rollers (10, 11) at one end and a barrel (12) at the other end, the second step section (5) being displaceable in a length-changeable manner relative to the first step section (4) and being fixable in at least two different positions,
**characterised in that**
one of the tread portions (4, 5) has a spring pin (7) and wherein the other tread portion (4, 5) has at least two bores (8, 9),
wherein the spring pin (7) can be brought reversibly into operative connection with the first bore (8) or the second bore (9) in order to adapt the overall extension or the tread surface of the running board (2) to the person.

2. Scooter with a running board (2) and a handlebar (3), wherein the running board (2) has rollers (10, 11) at one end and a barrel (12) at the other end, **characterised in that** the running board (2) or a second step portion (5) comprises a brake (23), said brake (23) consisting of a connecting web (35) and a partial circle tube portion (36), said partial circle tube portion (36) having a foot step area (37), and an apex of said foot step area (37) extending at or below a length of said step board (2) or said second step portion (5), respectively.

3. Scooter according to claim 2, **characterized in that** the brake (23) is pivotally arranged on the second tread portion (5) so that the brake (23) can be pressed onto a circumference (24) of the barrel (12).

4. Scooter according to any of the previous claims 1 to 3, **characterized in that** the second step portion (5) comprises the barrel (12).

5. Scooter according to one of the previous claims 2 to 4, **characterized in that** a first tread section (4) has a spring pin (7) which can be brought reversibly into operative connection with a first bore (8) or a second bore (9) of the second tread section (5).

6. Scooter according to any of the previous claims 1 to 5, **characterised in that** the first step section (4) has a receptacle (29) for the handlebar (3).

7. Scooter according to one of the previous claims, **characterised in that** the rollers (10, 11) have a tilt and steering construction.

8. Scooter according to one of the previous claims, **characterized in that** the handlebar (3) can be fixed telescopically.

9. Scooter with a footboard (2) and a handlebar (3), the footboard (2) having rollers (10, 11) at one end and a barrel (12) at the other end, **characterised in that** the entire support structure of the footboard (2) is made in one piece from plastic and comprises a brake (23), wherein said brake (23) is composed of a connecting web (35) and a pitch circle tube portion (36), said pitch circle tube portion (36) having a foot step portion (37), and an apex of said foot step portion (37) extending in or below a length extension of said footboard (2).

10. Scooter according to claim 9, **characterised in that** the brake (23) is pivotally mounted on the footboard (2) so that the brake (23) can be pressed on a circumference (24) of the barrel (12).

11. Scooter according to one of the previous claims 1 to 10, **characterized in that** the running board (2) has a receptacle (29) for the handlebar (3).

## Revendications

1. Patinette avec un marchepied (2) et un guidon (3),
dans laquelle le marchepied (2) se compose d'un premier segment de marche (4) et d'un deuxième segment de marche (5), dans laquelle le deuxième segment de marche (5) peut être déplacé en longueur et fixé par rapport au premier segment de marche (4), dans laquelle une extension globale du marchepied (2) ou une surface de marche du marchepied (2) est orientée en fonction d'une personne utilisant la patinette (1), dans laquelle le marchepied (2) présente, à une extrémité, des roulettes (10, 11) et, à l'autre extrémité, un rouleau (12), dans laquelle le deuxième segment de marche (5) est déplaçable en longueur par rapport au premier segment de marche (4) et peut être fixé dans au moins deux positions différentes,
**caractérisée par le fait que** l'un des segments de marche (4, 5) présente une goupille élastique (7) et l'autre segment de marche (4, 5) présente au moins deux alésages (8, 9),
dans laquelle la goupille élastique (7) peut être amenée de manière réversible en liaison active avec le premier alésage (8) ou avec le deuxième alésage (9) pour adapter l'extension globale ou la surface de marche du marchepied (2) à la personne.

2. Patinette avec un marchepied (2) et un guidon (3), dans laquelle le marchepied (2) présente, à une extrémité, des roulettes (10, 11) et, à l'autre extrémité, un rouleau (12), **caractérisée par le fait que** le marchepied (2) ou un deuxième segment de marche (5) comporte un frein (23), dans laquelle le frein (23) se compose d'une bretelle de connexion (35) et d'un segment de tube en forme de cercle partiel (36), dans laquelle le segment de tube en forme de cercle partiel (36) présente une zone de pédale (37) et un sommet de la zone de pédale (37) s'étend dans ou sous une extension en longueur du marchepied (2) ou du deuxième segment de marche (5).

3. Patinette selon la revendication 2, **caractérisée par le fait que** le frein (23) est disposé de manière pivotante sur le deuxième segment de marche (5), de sorte que le frein (23) puisse être pressé contre une circonférence (24) du rouleau (12).

4. Patinette selon l'une des revendications précédentes 1 à 3, **caractérisée par le fait que** le deuxième segment de marche (5) comporte le rouleau (12).

5. Patinette selon l'une des revendications précédentes 2 à 4, **caractérisée par le fait qu'**un premier segment de marche (4) présente une goupille élastique (7) qui peut être amenée de manière réversible en liaison active avec un premier alésage (8) ou un deuxième alésage (9) du deuxième segment de marche (5).

6. Patinette selon l'une des revendications 1 ou 5, **caractérisée par le fait que** le premier segment de marche (4) présente un logement (29) pour le guidon (3).

7. Patinette selon l'une des revendications précédentes, **caractérisée par le fait que** les roulettes (10, 11) présentent une construction à direction inclinable.

8. Patinette selon l'une des revendications précédentes, **caractérisée par le fait que** le guidon (3) peut être fixé de manière télescopique.

9. Patinette avec un marchepied (2) et un guidon (3), dans laquelle le marchepied (2) présente, à une extrémité, des roulettes (10, 11) et, à l'autre extrémité, un rouleau (12), **caractérisée par le fait que** toute la structure porteuse du marchepied (2) est fabriquée d'une seule pièce en matière plastique et comporte un frein (23), dans laquelle le frein (23) se compose d'une bretelle de connexion (35) et d'un segment de tube en forme de cercle partiel (36), dans laquelle le segment de tube en forme de cercle partiel (36) présente une zone de pédale (37) et un sommet de la zone de pédale (37) s'étend dans ou sous une extension en longueur du marchepied (2).

10. Patinette selon la revendication 9, **caractérisée par le fait que** le frein (23) est disposé de manière pivotante sur le marchepied (2), de sorte que le frein (23) puisse être pressé contre une circonférence (24) du rouleau (12).

11. Patinette selon l'une des revendications précédentes 1 à 10, **caractérisée par le fait que** le marchepied (2) présente un logement (29) pour le guidon (3).
